# EUROPÄISCHE PATENTSCHRIFT

(11) **EP 4 202 399 B1**
(45) Veröffentlichungstag und Bekanntmachung des Hinweises auf die Patenterteilung: **04.12.2024**
(21) Anmeldenummer: 22214428.9
(22) Anmeldetag: 19.12.2022
(51) Int. Cl.: G01M 17/007, B21D 13/04, B29C 67/00

(54) **VERFAHREN ZUR OBERFLÄCHENBEARBEITUNG EINES BAUTEILS EINES KRAFTFAHRZEUGPRÜFSTANDES UND BAUTEIL EINES KRAFTFAHRZEUGPRÜFSTANDES**
METHOD FOR SURFACE PROCESSING OF A COMPONENT OF A MOTOR VEHICLE TEST STAND AND COMPONENT OF A MOTOR VEHICLE TEST STAND
PROCÉDÉ DE TRAITEMENT DE SURFACE D'UN COMPOSANT D'UN BANC D'ESSAI DE VÉHICULE AUTOMOBILE ET COMPOSANT D'UN BANC D'ESSAI DE VÉHICULE AUTOMOBILE

(30) Priorität: 21.12.2021 DE 102021214802
(43) Veröffentlichungstag der Anmeldung: 28.06.2023
(73) Patentinhaber: MAHA Maschinenbau Haldenwang GmbH & Co. KG, 87490 Haldenwang (DE)
(72) Erfinder: REITER, Sebastian, 87499 Wildpoldsried (DE); KALFIRST, Jochen, 87435 Kempten (DE); SCHADE, Sebastian, 86956 Schongau (DE); GROMER, Niklas, 87435 Kempten (DE)
(74) Vertreter: MERH-IP Matias Erny Reichl Hoffmann Patentanwälte PartG mbB

(56) Entgegenhaltungen:
- CN-U- 209 485 699
- DE-U1- 202012 103 409

## Beschreibung

Die vorliegende Patentanmeldung betrifft ein Verfahren zur Oberflächenbearbeitung eines Bauteils eines Kraftfahrzeugprüfstandes und ein entsprechendes Bauteil. Das Verfahren dient dazu, eine Oberfläche des genannten Bauteils derart zu bearbeiten, dass auf der Oberfläche plastische Verformungen erzeugt werden, die als eine alternative "quasi"-Rollenbeschichtung bzw. Plattenbeschichtung genutzt werden können bzw. als eine solche Beschichtung fungieren. Auf einer derart "beschichteten" Oberfläche kann ein Rad eines zu prüfenden Kraftfahrzeuges abgestellt oder abgerollt werden. Die Beschichtung erhöht die Oberflächenrauigkeit bzw. den Reibwert, um ein Abrutschen oder Durchdrehen des Kraftfahrzeugrades während eines Kraftfahrzeugprüfvorganges zu verhindern. Vorteilhaft ist es, dass die Beschichtung ohne zusätzlichen Materialauftrag und mittels herkömmlicher Werkzeuge und Werkzeugmaschinen, wie z.B. CNC Drehmaschinen, durchgeführt werden kann. Der Wärmeeintrag in das Bauteil ist gering.

Aus dem Stand der Technik sind Beschichtungen für Bauteile eines Fahrzeugprüfstandes bekannt, wobei die Bauteile Rollen oder Platten umfassen, auf denen ein oder mehrere Fahrzeugräder abgestellt werden. Für klassische Reifen eines Kraftfahrzeugrades ist es gemäß dem Stand der Technik üblich, dass auf der Oberfläche der Rolle bzw. der Platte des Fahrzeugprüfstandes Erhebungen bzw. Erhöhungen mittels eines Schweißverfahrens aufgebracht werden. Dazu kann bspw. eine Drehmaschine mit Schutzgasschweißgerät herangezogen werden, die dann eine Hartschweißnaht in einem vorgegebenen Muster auf der Oberfläche der Rolle bzw. der Platte des Fahrzeugprüfstandes aufbringt. Ebenfalls ist es bekannt, für normale Reifen eines Kraftfahrzeugrades eine Kunststoffbeschichtung zu verwenden, die mittels eines Zwei-Komponenten-Klebers üblicherweise von Hand aufgetragen wird. Für spezielle Reifen, wie z. B. Spikereifen, können zudem auch sogenannte "Stabrollen" bzw. "Streckbleche" herangezogen werden, wobei hier bspw. Stäbe aufgeschweißt werden oder Nuten in die Rolle eingefräst, d. h. spanend bearbeitet, werden. Bei Leistungsprüfständen sind auch flammbeschichtete Rollen bekannt. Im Hinblick auf Plattenprüfstände ist zudem auch aus dem Stand der Technik bekannt, eine Plattenbeschichtung mittels einer flüssigen Antirutschbeschichtung oder eines Antirutschklebebandes aufzutragen.

Die vorgenannten bekannten Beschichtungen für Rollen und Platten eines Fahrzeugprüfstandes haben jedoch Nachteile. Im Hinblick auf Techniken, die auf Schweißverfahren beruhen, sind dies u. a.: Die Schweißnaht kann ungleichmäßig ausfallen, sodass das Endergebnis schlecht reproduzierbar ist und die Prozesssicherheit somit nicht sicher gewährleistet ist. Beim Aufbringen von Schweißperlen als eine Rollen- bzw. Plattenbeschichtung, die hohl ausgeführt sind, wirkt sich deren Scharfkantigkeit im Hinblick auf eine mögliche Beschädigung des Reifens des Kraftfahrzeugrades negativ aus und die Widerstandsfähigkeit dieser Schweißperlen ist relativ gering, so dass die Rollenbeschichtung keine erhöhte Lebensdauer sicherstellen kann.

Ferner ist es im Hinblick auf die Schweißverfahren nachteilig, dass das Grundmaterial der Platte bzw. der Rolle schweißbar sein muss und das Schweißgut zum Grundwerkstoff passen muss, dass ein hoher Wärmeeintrag zu erhöhtem Verzug und Energieaufwand führen kann und zudem giftige Dämpfe entstehen können, die eine Absaugung während des Beschichtungsvorganges notwendig machen.

Im Hinblick auf Kunststoffbeschichtungen ist zudem nachteilig, dass zusätzliche Materialien benötigt werden, wie z. B. Kleber etc., und giftige Dämpfe ebenfalls eine Absaugung nötig machen. Die aufwendige und anfällige Vorbehandlung des Grundmaterials ist zudem ebenfalls ein Nachteil und führt zu erhöhter Prozessdauer.

Die DE 20 2012 103409 U1 beschreibt einen Bodenrost mit einer Unterseite und einer begehbaren Oberseite, aus der mindestens ein Anti-Rutsch-Mittel in Form eines Erhebungselementes hervorsteht, wobei ein ausschließlich zum Ableiten von Gasen oder Fluiden von der Oberseite dienendes Abflusselement mit mindestens einem Öffnungsbereich benachbart zu dem Erhebungselement angeordnet ist.

CN 209 485 699 U beschreibt eine Walze, die für die Erfassung der Bremskraft von Winterreifen geeignet ist und einen zylindrischen Walzenkörper umfasst, wobei drehende Walzenwellen fest an der linken und rechten Seitenfläche des Walzenkörpers angeordnet sind und die Mittelachsen der drehenden Walzenwellen mit der Mittelachse des Walzenkörpers zusammenfallen und eine Vielzahl von wellenförmigen vorstehenden Blöcken ist ringförmig auf der äußeren Umfangsfläche des Walzenkörpers verteilt und erstreckt sich von der linken Seitenfläche des Walzenkörpers zur rechten Seitenfläche des Walzenkörpers. Zwischen jeweils zwei vorstehenden Blöcken wird ein Raum mit vorstehenden Punkten gebildet, jeder Raum mit vorstehenden Punkten ist mit einer Vielzahl von vorstehenden Punkten mit der gleichen Höhe versehen, alle vorstehenden Punkte sind auf der äußeren Umfangsfläche des Walzenkörpers angeordnet, und die vorstehenden Punkte sind höher als die vorstehenden Blöcke. Die vorspringenden Blöcke werden hauptsächlich zur Erhöhung des Reibungskoeffizienten des Rollenkörpers verwendet, und die vorspringenden Punkte können neben dem Reibungskoeffizienten des Rollenkörpers in Rillen eines Winterreifens eingebettet werden, so dass der Winterreifen einen besseren Kontakt mit dem Rollenkörper herstellt und die Anzahl der Rutschzeiten des Winterreifens auf dem Rollenkörper reduziert wird. Im Hinblick auf die oben geschilderten Nachteile ist es eine technische Aufgabe der vorliegenden Offenbarung, ein Verfahren und ein entsprechendes Bauteil bereitzustellen, das eine verbesserte Oberflächenbearbeitung unter Umgehung der oben genannten Nachteile ermöglicht.

Diese Aufgabe wird von den beigefügten Patentansprüchen gelöst. Gemäß einem ersten Aspekt wird ein Verfahren zur Oberflächenbearbeitung eines Bauteils eines Kraftfahrzeugprüfstandes beschrieben. Das genannte Bauteil kann vorzugsweise im Bereich der zu bearbeitenden Oberfläche ein plastisch verformbares Material (ausreichender Wandstärke) aufweisen. Das Material ist besonders bevorzugt ein metallischer Werkstoff oder ein plastisch verformbarer Kunststoff.

Das Verfahren umfasst insbesondere den Schritt des Erzeugens einer plastischen Verformung des Materials in einem Teilabschnitt der zu bearbeitenden Oberfläche. Die plastische Verformung erfolgt dabei mittels eines Eindrückens des Materials mit einem Werkzeug. Bevorzugt wird das Eindrücken derart ausgeführt und damit eine plastische Verformung in dem genannten Teilabschnitt der Oberfläche erzeugt, dass eine Vertiefung und eine Erhöhung der Oberfläche plastisch verformt in dem Material zurückbleiben. Weiterhin umfasst das Verfahren üblicherweise ein Wiederholen des vorgenannten Schrittes in einem definierten Abstand.

Das oben genannte bevorzugt spanlose Verfahren weist die Vorteile auf, dass kein zusätzliches Material außer dem Grundmaterial des Bauteils benötigt wird und handelsübliche Materialien, die plastisch umformbar sind, herangezogen werden können. Eine Einschränkung auf schweißbare Metalle ist somit nicht gegeben und das Grundmaterial verfestigt sich durch Kaltverfestigung, so dass der Wärmeeintrag in das Bauteil sehr gering ist. Durch ein mehrfaches Wiederholen des Schrittes des Erzeugens einer plastischen Verformung des Materials kann zudem gemäß einem beliebigen, gewünschten Bearbeitungsmuster der Oberfläche eine Beschichtung hergestellt werden. Dies erlaubt maximale Flexibilität bei der Ausführung des Verfahrens. Die durch das mehrfache Wiederholen des Erzeugens einer plastischen Verformung erzeugte Oberflächenumformung, die für die hier vorgestellte Anmeldung nachfolgend auch als "Beschichtung" bezeichnet werden wird (auch wenn keine Beschichtung im eigentlichen Sinne vorliegt, hergestellt wird oder durchgeführt wird, sondern vielmehr eine bereits vorhandene Rollenoberfläche bzw. eine Schicht der Rollenoberfläche konturiert bzw. nachbearbeitet wird, um eine Oberfläche zu erzeugen, die wie die herkömmlichen und vorbekannten Beschichtungen eingesetzt werden kann), weist eine hohe Langlebigkeit auf, da die erzeugten Erhöhungen, die auch als Nasen oder dergleichen im Nachfolgenden bezeichnet werden können, komplett von Material ausgefüllt sind, d. h. nicht hohl sind. Die Bearbeitung selbst kann von einer üblichen Werkzeugmaschine bzw. CNC-Werkzeugmaschine mit einem entsprechenden Werkzeug durchgeführt werden und bedarf keiner weiteren Vorbereitungen oder Einrichtungen, wie z. B. Materialvorbehandlungen, Absaugungen von giftigen Dämpfen etc.

Bevorzugt kann das Erzeugen einer plastischen Verformung gemäß einem vorgegebenen (Bearbeitungs-)Muster für die Anordnung der plastischen Verformungen auf der Oberfläche wiederholt werden. Wie bereits zuvor beschrieben wurde ermöglicht dies höchstmögliche Flexibilität und Gestaltungsfreiheit im Hinblick auf die Anordnung der Verformungen auf der zu bearbeitenden Oberfläche. Es können somit die entsprechenden Bearbeitungsrandbedingungen, wie z. B. Größe der zu bearbeitenden Teilflächen, Abstand der plastischen Verformungen zueinander, geometrische Anordnung der plastischen Verformungen zueinander, etc., beliebig und im Hinblick auf den Einsatzzweck positioniert und angeordnet werden.

Ferner kann das Werkzeug von einer Werkzeugmaschine gehalten werden und das Erzeugen der plastischen Verformung kann mittels der Werkzeugmaschine durchgeführt werden. Die Werkzeugmaschine kann eine handelsübliche CNC-Werkzeugmaschine oder dergleichen sein, so dass die Beschichtung gemäß dem vorbeschriebenen Verfahren automatisiert und vorprogrammierbar durchgeführt werden kann.

Ferner kann das Wiederholen des Schrittes zur Erzeugung einer plastischen Verformung ebenfalls von der Werkzeugmaschine gesteuert werden, d. h. das Anfahren eines anderen Teilbereiches der zu bearbeitenden Oberfläche kann ebenfalls von der Werkzeugmaschine automatisiert durchgeführt werden. Dazu kann ein entsprechendes Bearbeitungsmuster in einem Bearbeitungsprogramm vorgegeben sein. Die Herstellung der Beschichtung gemäß dem beschriebenen Verfahren ist somit nahezu vollautomatisiert durchführbar und somit kosteneffizient und in hoher Stückzahl möglich.

Ferner kann eine Form bzw. Geometrie der plastischen Verformung durch die Auswahl des Werkzeuges bestimmbar sein. Grundsätzlich kann für das hier beschriebene Verfahren eine breite Auswahl von Werkzeugen herangezogen werden, die je nach Formgebung des Werkzeugkopfes bzw. der Werkzeuggrundform eine unterschiedliche Form der plastischen Verformung erzeugen kann. Auch dies erhöht weiterhin die Flexibilität und Gestaltungsfreiheit bei der Erzeugung der Beschichtung.

Darüber hinaus kann eine Form bzw. Geometrie der plastischen Verformung durch eine Änderung der Bearbeitungsparameter bestimmbar sein. Hier sei angemerkt, dass dies zusätzlich zu der Form bzw. Auswahl des Werkzeuges eine Option ist, die Form bzw. Geometrie der plastischen Verformung einzustellen bzw. vorzubestimmen. Unter die genannten Bearbeitungsparameter fallen u. a. die Drehzahl/Teilschritte der Werkzeugmaschine, deren Vorschub, die eingesetzte Kraftausübung auf die Oberfläche, die relative Positionierung des Werkzeuges zu der Oberfläche/Anstellwinkel des Werkzeugs, die Eindringtiefe, die Längsbewegung etc. Eine Veränderung der Bearbeitungsparameter ist dabei vorteilhafterweise auch während eines Bearbeitungsvorganges bzw. während der Durchführung des Verfahrens zur Herstellung der Beschichtung möglich, so dass unterschiedliche Teilbereiche bzw. Teilabschnitte der zu bearbeitenden Oberfläche mit unterschiedlich geformten plastischen Verformungen ausgestattet werden können, ohne der grundsätzlichen Bearbeitungsaufwand (deutlich) zu erhöhen.

Ferner wird das Verfahren an einem Bauteil ausgeführt, das eine Rolle und/oder eine Platte zur Aufnahme eines Fahrzeugrades eines Fahrzeugprüfstandes ist. Im Falle einer Rolle ist dabei die zu bearbeitende Oberfläche die äußere Mantelfläche oder ein Teil der äußeren Mantelfläche. Im Falle einer Platte ist die zu bearbeitende Oberfläche zumindest ein Teil der äußeren ebenen Oberfläche der Platte, d. h. die zu bearbeitende Oberfläche einer Platte befindet sich nicht an den Kanten der Platte. Es wird davon ausgegangen, dass eine Platte ein dreidimensionales Bauteil ist, dessen Länge und Breite größer ausfallen als dessen Dicke bzw. Höhe.

Gemäß einem weiteren Aspekt wird ebenfalls ein Bauteil eines Kraftfahrzeugprüfstandes mit einer Oberfläche beansprucht, die eine Vielzahl plastischer Verformungen aufweist. Das genannte Bauteil ist dazu eingerichtet, ein Kraftfahrzeugrad oder mehrere Kraftfahrzeugräder auf der Oberfläche aufzustellen oder abzurollen. Die plastischen Verformungen werden mittels des oben geschilderten Verfahrens hergestellt.

Gemäß einem weiteren Aspekt ist ebenfalls ein Kraftfahrzeugprüfstand mit einem oder mehreren Bauteilen gemäß dem vorbeschriebenen Aspekt der vorliegenden Offenbarung umfasst.

Wie bereits oben ausgeführt wurde, kann die vorliegende Offenbarung die Nachteile bekannter Beschichtungen aus dem Stand der Technik ausräumen und eine Vielzahl von technischen Vorteilen anbieten, die zu einer insgesamt verbesserten Beschichtung bzw. einem Verfahren zur Herstellung einer derart verbesserten Beschichtung führen.

### Figurenbeschreibung

### Kurzbeschreibung

Fig. 1a zeigt beispielhaft eine perspektivische Ansicht einer Rolle eines Fahrzeugprüfstandes mit einer bearbeiteten Oberfläche gemäß der vorliegenden Offenbarung.
Fig. 1b zeigt einen Ausschnitt Z der Fig. 1a in 5-facher Vergrößerung.
Fig. 2a zeigt eine Draufsicht auf die Rolle gemäß Fig. 1a.
Fig. 2b zeigt einen Querschnitt entlang der Linie A-A in der Fig. 2a.
Fig. 2c zeigt einen Ausschnitt Y der Fig. 2b in 5-facher Vergrößerung.
Fig. 3a zeigt beispielhaft eine perspektivische Ansicht einer Platte eines Fahrzeugprüfstandes mit einer bearbeiteten Oberfläche gemäß der vorliegenden Offenbarung.
Fig. 3b zeigt einen Ausschnitt Z der Fig. 3a in 5-facher Vergrößerung.
Fig. 4a zeigt eine Draufsicht auf die Platte gemäß Fig. 3a.
Fig. 4b zeigt einen Querschnitt entlang der Linie A-A in der Fig. 4a.
Fig. 4c zeigt einen Ausschnitt Y der Fig. 4b in 5-facher Vergrößerung.
Fig. 5a zeigt beispielhaft eine perspektivische Ansicht einer Platte eines Fahrzeugprüfstandes mit einer bearbeiteten Oberfläche gemäß der vorliegenden Offenbarung.
Fig. 5b zeigt einen Ausschnitt Z der Fig. 5a in 5-facher Vergrößerung.
Fig. 6a zeigt eine Draufsicht auf die Platte gemäß Fig. 5a.
Fig. 6b zeigt einen Querschnitt entlang der Linie A-A in der Fig. 6a.
Fig. 6c zeigt einen Ausschnitt Y der Fig. 6b in 5-facher Vergrößerung.
Fig. 7a zeigt ein Beispiel gemäß der vorliegenden Offenbarung für ein Bearbeitungswerkzeug und einen Verfahrweg des Bearbeitungswerkzeuges bei der Erzeugung einer plastischen Verformung.
Fig. 7b zeigt ein Beispiel gemäß der vorliegenden Offenbarung, bei dem das Werkzeug in die zu bearbeitende Oberfläche eingefahren ist.
Fig. 8a zeigt ein Beispiel gemäß der vorliegenden Offenbarung für ein weiteres Bearbeitungswerkzeug und einen Verfahrweg des Bearbeitungswerkzeuges bei der Erzeugung einer plastischen Verformung.
Fig. 8b zeigt ein Beispiel gemäß der vorliegenden Offenbarung, bei dem das weitere Werkzeug in die zu bearbeitende Oberfläche eingefahren ist.

### Ausführliche Beschreibung der Figuren

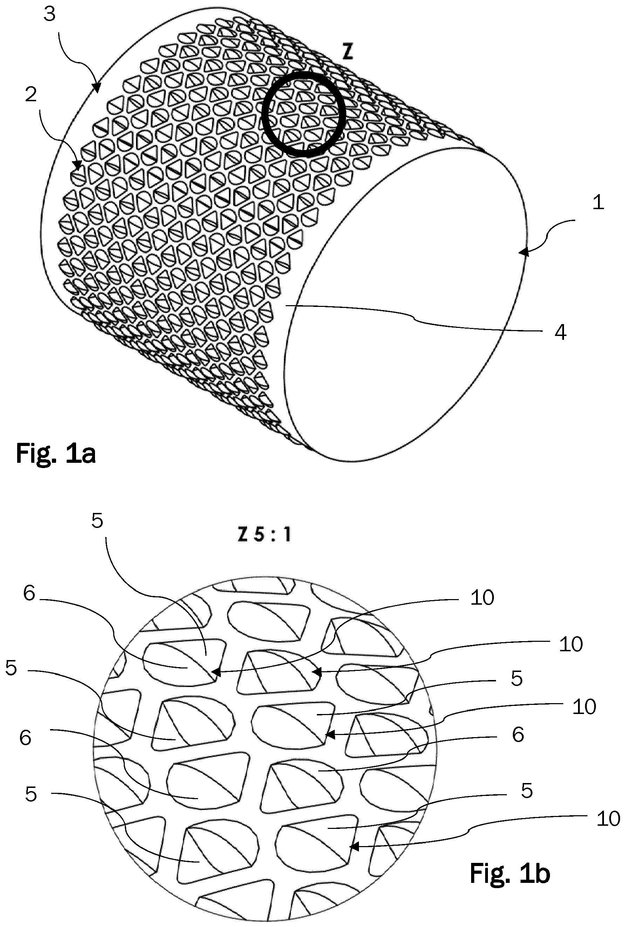

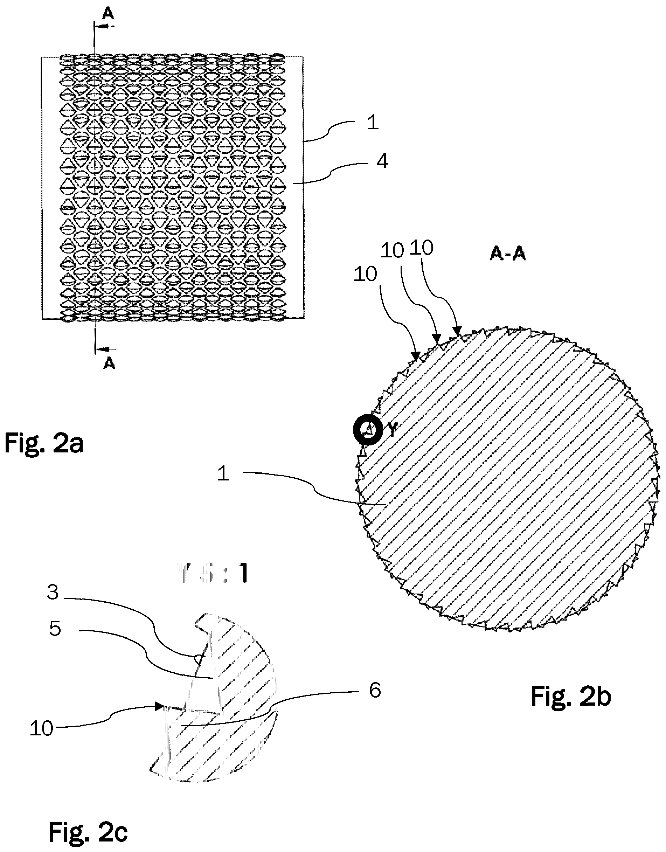

Die Figuren 1a-b und 2a-c zeigen eine Rolle 1 eines Fahrzeugprüfstandes, beispielsweise zum Prüfen von Kraftfahrzeugbremsen. Grundsätzlich können Rollen 1, wie die in den Figuren 1a-b und 2a-c dargestellte, in unterschiedlichen Fahrzeugprüfständen je nach Dimensionierung und Bauform eingesetzt werden. Üblicherweise wird ein Reifen eines Kraftfahrzeuges oder mehrere Reifen auf einer Rolle 1 abgestellt.

Die vorliegende Offenbarung zeigt nun eine hier als "Beschichtung" 2 bezeichnete Bearbeitung der Oberfläche 3 auf, die technische Vorteile aufweist, die anhand der nachfolgenden Beschreibung deutlich werden. Die Beschichtung 2 setzt sich aus einer Vielzahl von plastischen Verformungen 10 zusammen.

Konkret zeigt die Figur 1a eine Rolle 1 eines Fahrzeugprüfstandes (nicht gezeigt) mit einer Beschichtung 2. Die Fig. 1b zeigt einen vergrößerten Teilabschnitt Z der Beschichtung 2, wobei der konkrete Teilabschnitt in der Fig. 1a mittels eines Kreises und der Buchstabenmarkierung "Z" angezeigt ist. Die Figur 1a zeigt ferner, dass die Bearbeitung, d.h. die Beschichtung 2, in einem in axialer Richtung der Rolle 1 mittleren Bereich der Mantelfläche 3 der Rolle 1 angeordnet ist und auf beiden axialen Endseiten der Mantelfläche ein Bereich keine Beschichtung 2 aufweist. Dieser unbearbeitete Mantelflächenbereich 4 ist schmaler als der Bereich, in dem die Beschichtung 2 aufgebracht ist, wobei dies auch abweichend gestaltet sein kann. Es ist allerdings bevorzugt, dass die Beschichtung 2 genauso breit wie die Rolle oder die Spur eines zu testenden Kraftfahrzeuges (beides nicht gezeigt) ist.

Die Fig. 1b zeigt den vergrößerten Abschnitt der Beschichtung 2 an der Stelle "Z" in Fig. 1a. Die Vergrößerung ist hier ca. 5-fach. Wie sich anhand der Vergrößerung erkennen lässt, weist die Beschichtung 2 eine wiederholte Anzahl von gleichartigen bzw. bevorzugt identischen plastischen Verformungen 10 der Rolle 1 auf. Dazu ist die Rolle 1 bzw. zumindest ein Material im äußeren Durchmesserbereich der Rolle 1 ein plastisch verformbares Material, besonders bevorzugt ein Metall. Die Rolle 1 kann auch eine Hohlrolle sein (statt der gezeigten Vollmaterialrolle), um Gewicht einzusparen.

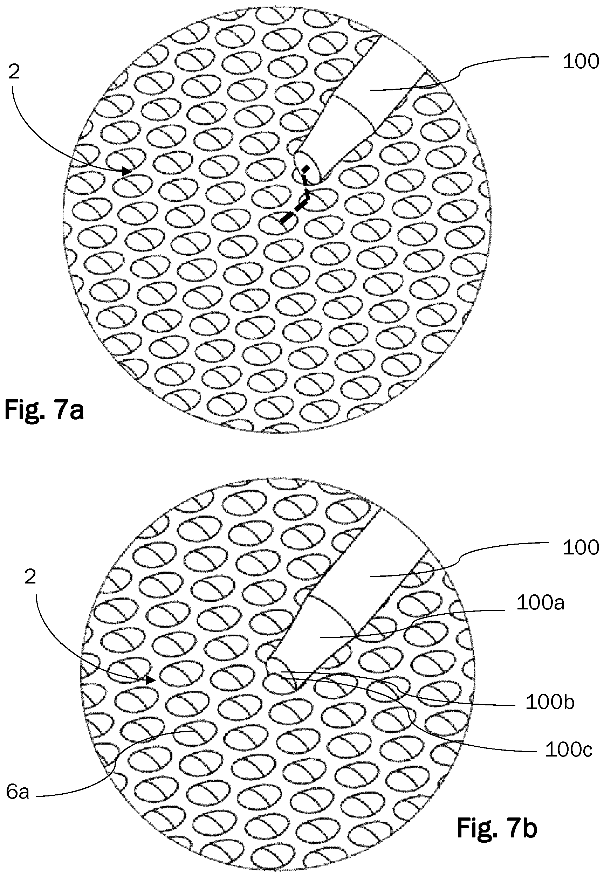

Die plastischen Verformungen 10 gemäß Fig. 1a werden, wie auch die Fig. 2a unterstützend zeigt, in zueinander versetzten Zeilen in das Oberflächenmaterial der Rolle 1 eingebracht. Die plastischen Verformungen 10 werden mittels eines Werkzeuges 100, 101 (s. Figs. 7a,b) in die Rollenoberfläche eingestoßen bzw. eingedrückt, wobei auch andere Umformvorgänge heranziehbar sind. Für das Einbringen der plastischen Verformungen 10 wird gemäß einem bevorzugten Herstellungsverfahren ein Werkzeug 100,101 mit einem flachen Winkel zu der zu bearbeitenden Oberfläche in das Material eingestoßen, so dass die Geometrie bzw. Form der plastischen Verformung 10 in Stoßrichtung des Werkzeuges 100, 101 zunächst eine Vertiefung 5 in der Materialoberfläche aufweist und daran anschließend eine Erhöhung 6, die durch das plastische Verschieben des Materials bei einem Vorschub des Werkzeuges 100, 101 erzeugt wird.

In der Draufsicht hat jede plastische Verformung 10 gemäß den Fig. 1 und 2 somit näherungsweise die Form zweier an einer Grundfläche aneinandergefügten Dreiecke bzw. eines gestreckten Viereckes, wobei näherungsweise in einem mittleren Bereich dieser Grundform der Übergang von der Vertiefung 5 zu der Erhöhung 6 zu finden ist. Im Längsschnitt durch die plastische Verformung 10, der in den Figs. 2b und 2c dargestellt ist, ist ferner festzustellen, dass die Vertiefung 5 in Stoßrichtung des Werkzeuges 100, 101 an Tiefe zunimmt und die Erhöhung 6 in Stoßrichtung des Werkzeuges 100, 101 ausgehend von einer maximalen Höhe kontinuierlich auf das Niveau der überarbeitenden Oberfläche 4 abfällt. Fig. 2b zeigt den Querschnitt durch die gesamte Rolle 1 an einer Position im Bereich der Beschichtung 2, so dass ersichtlich wird, wie eine gezahnte Oberfläche im Bereich der Beschichtung 2 geformt ist. Eine vergrößerter Ausschnitt, der mit "Y" in Fig. 2b gekennzeichnet ist, wird in ca. 5-facher Vergrößerung ferner von der Fig. 2c wiedergegeben.

Die Fig. 2c zeigt nochmals deutlicher eine plastische Verformung 10 im Schnitt, wodurch die Vertiefung 5 deutlich erkennbar wird, die bis unterhalb das Oberflächenniveau der unbearbeiteten Oberfläche 4 kontinuierlich absinkenden verläuft. An den tiefsten Punkt der Vertiefung 5 schließt sich dann sprunghaft die maximale Erhöhungsposition der Erhöhung 6 an, die dann von dem maximalen Punkt kontinuierlich auf das Ausgangsniveau der Mantelfläche 3 der Rolle 1 bzw. der unbearbeiteten Oberfläche 4 absinkt. Wie sich aus dem Schnitt der Fig. 2b weiterhin ergibt, ist die plastische Verformung 10 vollständig aus dem Material der Rolle 1 geformt, wenn es eine Vollmaterialrolle 1 ohne unterschiedliche Materialabschnitte ist. Falls eine Hohlrolle vorliegen sollte und/oder eine Rolle 1, die verschiedene Materialien in verschiedenen Abschnitten der Rolle 1 aufweisen sollte, so gilt ebenfalls, dass die plastischen Verformungen 10 bevorzugt ausschließlich aus dem Material geformt ist, das im entsprechend bearbeiteten Außenabschnitt der Rolle 1 (Durchmesseraußenabschnitt) angeordnet ist.

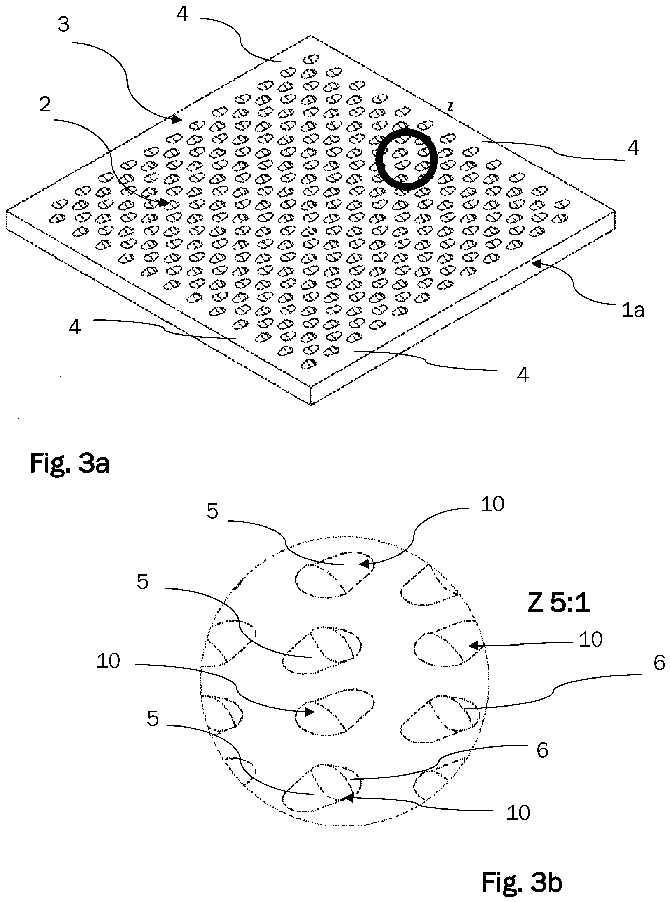

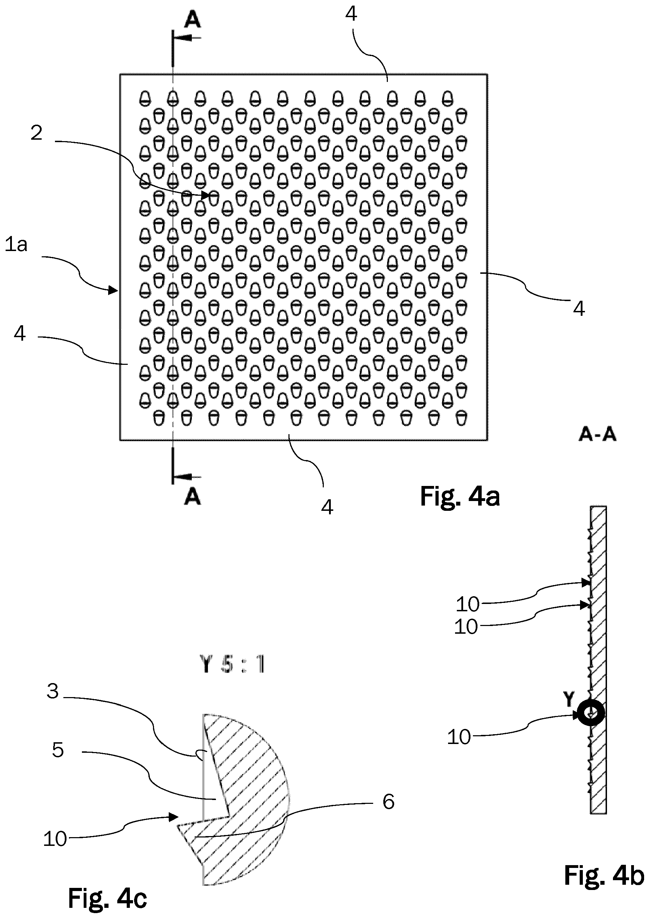

Die Figuren 1 und 2 zeigen zeilenweise gegeneinander versetzte plastische Verformungen 10, die in eine Rolle 1 eingebracht worden sind. Ferner zeigen die Figuren 3 und 4 eine sehr vergleichbare Anordnung, wobei hier plastische Verformungen 10 in die Oberfläche einer Platte 1a eingebracht sind. Die Platte 1a kann in entsprechenden Fahrzeugprüfständen ebenfalls zu der Aufnahme mindestens eines Kraftfahrzeugrades bzw. -reifens herangezogen werden. Die Herstellung ist ebenfalls vergleichbar zu der vorbeschriebenen. So ergibt sich gemäß Fig. 3a eine Beschichtung 2 in einem mittleren Bereich der Platte 1a an einer Oberfläche (einer flächigen, nicht der Kanten), wobei jeweils an allen vier Seiten ein Seitenstreifen unbearbeitete Oberfläche 4 belassen wurde. Die Beschichtung 2 ist bevorzugt groß genug, dass der Latsch eines Reifens vollständig darauf abgestellt werden kann. Die Figur 3b zeigt dann ebenfalls in ca. 5-facher Vergrößerung einen Ausschnitt der Beschichtung, der in Fig. 3a kreisförmig und mit dem Buchstaben "Z" markiert ist.

Die Figur 4a bildet eine Draufsicht der Platte 1a (Fig. 4a) ab, wobei in Fig. 4b ein Querschnitt durch die gesamte Platte 1a entlang der Linie A-A in Fig. 4a das "Zahn"-profil der Beschichtung 2 erkennen lässt. Die ca. 5-fache Vergrößerung einer plastischen Verformung 10 im Bereich "Y", der in Fig. 4b kreisförmig markiert ist, zeigt zudem eine vergleichbare Formgebung, wie bereits für die Fig. 2c beschrieben wurde. Allerdings macht die Fig. 4c auch deutlich, dass die genaue Formgebung variabel ist und von vielen schnell und ohne Komplexität anpassbaren Parametern abhängig ist. Beispielsweise zeigt die Fig. 4c, dass die Vertiefung 5 weniger tief ist und bei ca. gleicher Bearbeitungslänge weniger steil in das Material der Rolle 1 eindringt. Die Erhöhung 6 ist etwas höher als in Fig. 2c ausgeführt und fällt steiler ab. Dies kann beispielsweise durch den Einfahrwinkel des Werkzeuges 100, 101, dessen Formgebung, die Bearbeitungslänge in Fahrrichtung des Werkzeuges 100, 101, etc. vorgegeben und reproduzierbar (und auch automatisierbar) gesteuert werden.

Eine beispielhafte Formgebung der plastischen Verformung 10, wie in den vorbeschriebenen Figuren gezeigt wird, führt zu einer Erhöhung des Reibwertes der Oberfläche, mit der ein Rutschen oder Durchdrehen des Reifens des zu prüfenden Kraftfahrzeuges verhindern kann.

Die Formen der plastischen Verformung 10 können bereits durch eine Veränderung der Bearbeitungsparameter, wie z. B. eine Veränderung des Vorschubes, dessen Geschwindigkeit und/oder des Anstellwinkels des Werkzeuges 100, 101 gegenüber der Oberfläche der Rolle 1 oder Platte 1a, angepasst werden.

Die erzeugten plastischen Verformungen 10 sind, wie auch die vorgenannten Figs. zeigen, nicht hohl ausgeführt und somit sehr langlebig und gegenüber Abnutzung robust. Nach dem Erzeugen der plastischen Verformung 10 ist kein weiterer Bearbeitungsschritt notwendig, so dass das Herstellungsverfahren für die Beschichtung 2 schnell durchgeführt werden kann und die Rolle 1 bzw. die Platte 1a danach sofort einsatzfähig ist, ohne dass eine Vor- oder Nachbehandlung stattfinden müsste. Giftige Dämpfe oder dergleichen fallen nicht an, wie dies bei anderen Beschichtungsvorgängen der Fall ist.

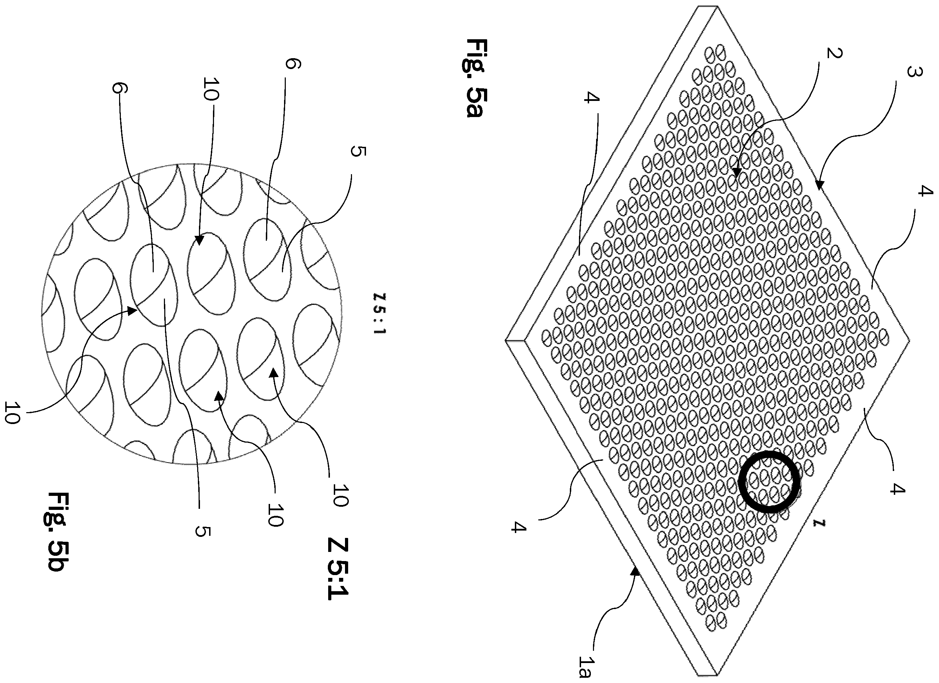

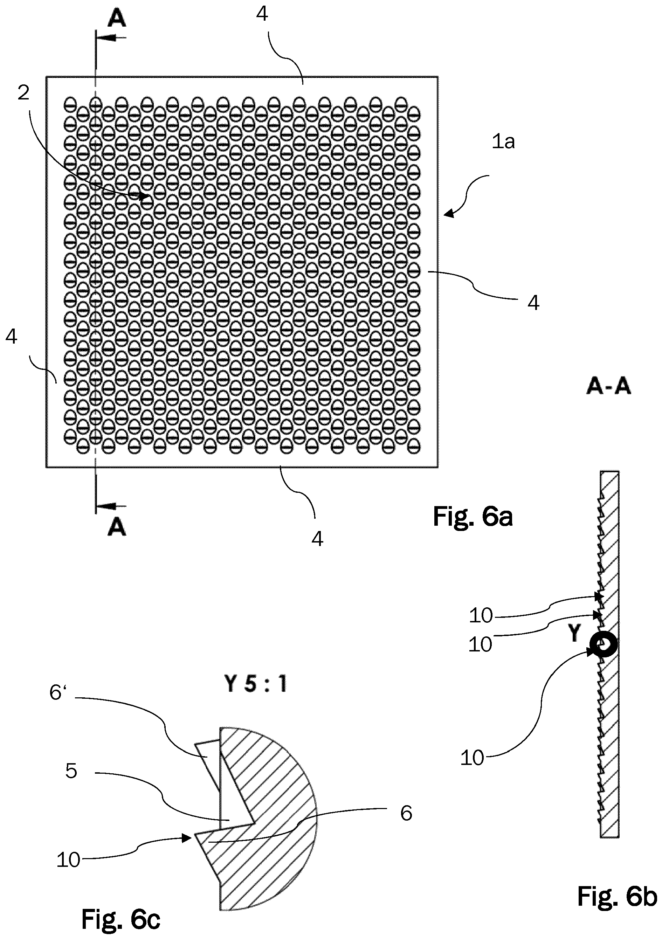

Bezüglich der Variabilität des Herstellungsverfahrens zeigen die Figs. 5 und 6 eine weitere Variation. Dabei weisen die Figuren 5a, b und 6a-c jeweils die gleichen Ansichten einer Platte 1a auf, wie die Figuren 3a,b und 4a-c. Unterschiede betreffen die Anordnung der plastischen Verformungen 10 je Zeile, wie sich insbesondere aus der Draufsicht der Fig. 6a und auch der Vergrößerung gemäß Fig. 5b jeweils im Vergleich zu den korrespondierenden Figuren 4a und 3b ersehen lässt. Die plastischen Verformungen 10 sind bei der Platte 1a gemäß den Figuren 5 und 6 nämlich nicht zeilenweise um 180° gedreht, sondern im in gleicher Richtung in das Material der Platte 1a eingefahren worden. Lediglich die Startpunkte der Zeilen sind, wie auch in den Figuren 3 und 4, alternierend zueinander versetzt gewählt. Der Versatz ergibt sich besonders deutlich aus der Fig. 6c, bei der eine Erhöhung 6' einer plastischen Verformung 10' zu erkennen ist, die in einer Zeile hinter der im Schnitt gezeigten plastischen Verformung 10 liegt. Es zeigt sich, dass die Vertiefung 5 der im Schnitt gezeigten plastischen Verformung 10 eine Überlappung mit der Erhöhung 6' aufweist. Auch durch diesen Versatz kann sehr feinfühlig die gewünschte Oberflächenbeschichtungsgriffigkeit (Rauheit) eingestellt werden.

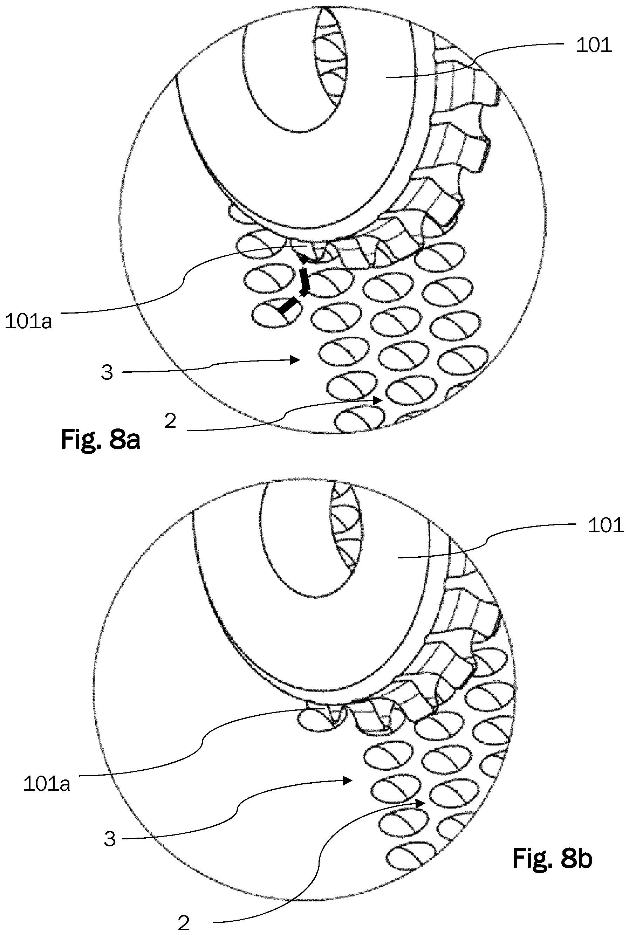

Bezüglich der Werkzeuge 100, 101 ergibt sich ebenfalls eine große mögliche Auswahl und zwei bevorzugte Beispiele sind in den Figuren 7 und 8 dargestellt.

Die Figur 7a, b zeigen ein stößelförmiges Werkzeug 100, das hier eine kegelstumpfförmige Werkzeugspitze 100a mit einem flachen vorderen Abschnitt 100b aufweist. Die Fig. 7a zeigt anhand der Strichlinie einen beispielhaften Verfahrweg des Werkzeuges 100, wobei dieser im Wesentlichen umfasst: Position oberhalb der Oberfläche der Platte 1a oder Rolle 1 anfahren, auf die vordefinierte Höhe oberhalb der Oberfläche der Platte 1a oder Rolle 1 verfahren und anschließend mit vordefiniertem Anstellwinkel und Vorschublänge (ggf. zusätzlich sind auch Geschwindigkeit des Vorschubes, etc. einstellbar) in das Material einfahren. Der Zeitpunkt, wenn das Werkzeug 100 in das Material an der Abschlussposition eingetaucht ist, wird von der Fig. 7b beispielhaft gezeigt. Danach kann das Werkzeug 100 zurückgefahren werden und eine weitere plastische Verformung 10 an anderer Stelle unter Ablauf der gleichen Schritte hergestellt werden. Die plastischen Verformungen können bezüglich ihrer Form identisch reproduziert werden oder mit entsprechend voreingestellten oder während der Bearbeitung auswählbaren Abweichungen hergestellt werden.

Weiterhin zeigt die Fig. 7b auch eine mögliche Modifikation bezüglich des verwendeten Werkzeuges 100. In der Fig. 7b wird in diesem Zusammenhang mit den Bezugszeichen "100c" und "6a" angezeigt, dass das Werkzeug 100 auch einen modifizierten vorderen Abschnitt 100c aufweisen kann, der dazu ausgebildet ist, die Kante 6a der aufgeschobenen Nase 6 zu brechen bzw. abzurunden, um eine Scharfkantigkeit der Kante 6a zu verhindern. Dadurch kann eine verbesserte Reifenschonung erreicht werden. Die Ausbildung des modifizierten vorderen Abschnittes 100c kann beispielsweise durch eine geeignete Formgebung, bspw. die Form der Schneide, wie oben beschrieben ausgebildet sein.

Als ein weiteres Beispiel für die sehr flexible und präzise (vor-)einstellbare Formenauswahl bezüglich der plastischen Verformungen 10 und der Werkzeugauswahl zeigen die Fig. 8a, b ein weiteres Werkzeug 101 zur Erzeugung der hier beschriebenen Beschichtung 2. In Fig. 8a wird ein schräggestelltes Prägerad als Werkzeug 101 mit einem Zahn 101a, wie bereits für die Fig. 7a beschrieben wurde, entlang dem gestrichelten Verfahrweg in das Material eingefahren und dann abgerollt. Fig. 8b zeigt den Zeitpunkt, zu dem der Zahn 101a am weitesten in das Material eingefahren ist.

Bevorzugt wird das Werkzeug 100, 101 von einer geeigneten Werkzeugmaschine (nicht gezeigt) gehalten, so dass die Bearbeitungsschritte bis hin zu einer vollautomatisierten Durchführung und Wiederholung vorprogrammiert sein können. Allerdings ist der Einsatz einer Werkzeugmaschine nur eine bevorzugte Ausführung und es kann auch von jeder anderen Möglichkeit zur Handhabung des Werkzeuges 100, 101 Gebrauch gemacht werden. Auch kann statt einem vollautomatisierten Ablauf abgesehen werden und die Bearbeitung durch den Anwender der Maschine, z.B. der Werkzeugmaschine, manuell oder halbautomatisiert gesteuert werden. Beispielsweise wenn flexibel eine Abweichung der Bearbeitung, z.B. einzelner Verformungen 10 oder dgl., während des Erstellen einer "Beschichtung" 2 ermöglicht werden soll.

Ein weiteres Beispiel für die sehr flexible Werkzeugauswahl und die Formenauswahl bezüglich der plastischen Verformungen 10 kann gemäß einer weiteren Alternative auch eine Zange oder ein zangenförmiges Werkzeug herangezogen werden, die hier nicht dargestellt ist. Ein solches alternatives Werkzeug kann mit entsprechend eingerichteten Spitzen bzw. vorderen Abschnitten verwendet werden, die mindestens zwei Verformungen gleichzeitig erzeugen können. Dies hat den zusätzlichen technischen Vorteil, dass sich die Reaktionskräfte bei der Umformung aufheben und die Bauteilaufnahme diese Kräfte nicht aufnehmen muss.

Des Weiteren kann auch ein alternatives Werkzeug vorgesehen sein, dass eine Walze ist oder das walzenförmig ist. Dieses ist nicht gesondert in den Figuren dargestellt. Eine solche alternative Ausführungsform bezüglich der Werkzeugauswahl kann dann den technischen Vorteil mit sich bringen, dass die Walze eine ganze Reihe von plastischen Verformungen 10 zeitgleich in die Bauteiloberfläche 3 einbringen kann. Die Walze selbst verfügt bevorzugt über einen eigenen Antrieb, der die (Walzen-)Rotation in Abhängigkeit von der Bauteilbewegung steuern kann. In einer besonders bevorzugten Alternative können auch zwei zueinander gegenläufig drehende Walzen zum Einsatz kommen, so dass sich die Reaktionskräfte gegenseitig aufheben, um die Bauteilaufnahme zu entlasten.

Es sei angemerkt, dass in den Figuren jeweils der besseren Lesbarkeit und Übersicht halber nicht jedes einzelne Element der Beschichtung 2 mit einem eigenen Bezugszeichen versehen wurde, sondern beispielhaft jeweils immer eine repräsentative Auswahl.

Abschließend kann noch einmal zusammengefasst werden, dass das hier beschriebene Verfahren und die entsprechend dadurch hergestellte Beschichtung 2 zu einer abriebfesten Rollenbeschichtung bzw. Oberflächenbearbeitung führt, die je nach Einsatzzweck geforderte Reibwerte aufweisen kann und das Verfahren kostengünstig und prozesssicher durchgeführt werden kann. Insbesondere werden die Vorteile realisiert, dass kein zusätzliches Material für die Herstellung der Beschichtung 2 erforderlich ist und jeglicher umformbare Werkstoff, d. h. nicht notwendigerweise ein schweißbares Metall, herangezogen werden kann. Besonders bevorzugt werden Metalle verwendet; es können jedoch auch plastisch umformbare Kunststoffe verwendet werden. Weiterhin wird das Grundmaterial durch die Verformung kaltverfestigt. Es entsteht kein erhöhter Wärmeeintrag, der zu ungewünschtem Verzug und einem erhöhten Energieverbrauch führen könnte. Die Oberfläche muss nicht vor- oder nachbehandelt werden; und zusätzliche Vorrichtungen, wie z. B. eine Absaugvorrichtung für giftige Dämpfe, werden nicht notwendig. Ebenfalls fallen keine Späne an und das Verfahren kann an einer handelsüblichen Bearbeitungsmaschine (nicht dargestellt) und mit entsprechenden Werkzeugen durchgeführt werden. Die Flexibilität der Herstellung ist dabei extrem hoch, da sowohl die Geometrie bzw. die Form der plastischen Verformungen 10 mittels der Auswahl des Werkzeuges 100, 101 und/oder der Einstellungen der Bearbeitungsparameter angepasst werden kann. Für Letzteres ist kein Werkzeugwechsel während des Herstellungsvorganges der Beschichtung 2 notwendig, sodass die Herstellung der Beschichtung 2 selbst bei unterschiedlicher Formgebung auf einer Oberfläche 3 sehr schnell durchgeführt werden kann. Die erzeugten Erhöhungen bzw. Nasen sind voll ausgefüllt, d. h. nicht hohl und somit langlebig. Es können auch unterschiedliche Ausrichtungen der plastischen Verformungen 10 ohne größeren Aufwand realisiert werden, bspw. durch ein Verändern der Fahrtrichtung des Werkzeuges 100, 101 beim Herstellen der plastischen Verformungen 10. Die Investitionskosten für die Werkzeuge 100, 101 sind ebenfalls gering, da keine komplexen Werkzeuge 100, 101 benötigt werden, wie dies bspw. auch die Fig. 7 und 8 dokumentieren. Es ist ferner noch einmal hervorzuheben, dass das Verfahren im Wesentlichen und bevorzugt lediglich aus einem einzelnen Hauptschritt besteht, der das Ausführen des Erzeugens der plastischen Verformung 10 umfasst. Dieser Schritt wird im Hinblick auf das gewünschte Bearbeitungsmuster beliebig häufig wiederholt, um die Beschichtung 2 umfassend eine Vielzahl von plastischen Verformungen 10 herzustellen.
1 Rolle
1a Platte
2 Beschichtung
3 Mantelfläche bzw. Oberfläche bzw. zu bearbeitende Oberfläche
4 unbearbeitete Oberfläche
5 Vertiefung
6 Erhöhung
10 plastische Verformung
100, 101 Werkzeug

## Patentansprüche

1. Verfahren zur Oberflächenbearbeitung eines Bauteiles eines Kraftfahrzeugprüfstandes, wobei das Bauteil im Bereich der zu bearbeitenden Oberfläche (3) ein plastisch verformbares Material aufweist und das Bauteil eine Rolle (1) und/oder eine Platte (1a) zur Aufnahme eines Fahrzeugrades ist und die zu bearbeitenden Oberfläche (3) der Rolle (1) die äußere Mantelfläche (3) oder ein Teil der äußeren Mantelfläche (3) ist und die zu bearbeitende Oberfläche (3) der Platte zumindest ein Teil einer der äußeren ebenen Oberflächen der Platte (1a) ist, das Verfahren umfasst:
Erzeugen einer plastischen Verformung (10) des Materials in einem Teilabschnitt der zu bearbeitenden Oberfläche (3) durch ein Eindrücken des Materials mit einem Werkzeug (100, 101) derart, dass die plastische Verformung (10) in dem Teilabschnitt eine Vertiefung (5) und eine Erhöhung (6) der Oberfläche (3) umfasst, und
Wiederholen des Erzeugens einer plastischen Verformung (10) in einem anderen Teilabschnitt der zu bearbeitenden Oberfläche (3).

2. Verfahren gemäß Anspruch 1, wobei das Erzeugen einer plastischen Verformung (10) gemäß einem vorgegebenen Muster für die Anordnung der plastischen Verformungen (10) auf der Oberfläche (3) wiederholt wird.

3. Verfahren gemäß zumindest einem der voranstehenden Patentansprüche, wobei das Werkzeug (100, 101) von einer Werkzeugmaschine gehalten wird und das Erzeugen der plastischen Verformung (10) mittels der Werkzeugmaschine durchgeführt wird.

4. Verfahren gemäß zumindest einem der voranstehenden Patentansprüche, wobei das Werkzeug (100, 101) von einer Werkzeugmaschine gehalten wird, das Erzeugen der plastischen Verformung (10) mittels der Werkzeugmaschine durchgeführt wird und ein Verfahren des Werkzeug (100, 101) zu einem anderen Teilbereich für das Wiederholen des Schrittes zu Erzeugung einer plastischen Verformung (10) von der Werkzeugmaschine durchgeführt wird.

5. Verfahren gemäß zumindest einem der voranstehenden Patentansprüche, wobei eine Form der plastischen Verformung (10) durch die Auswahl des Werkzeugs (100, 101) bestimmbar ist.

6. Verfahren gemäß zumindest einem der voranstehenden Patentansprüche, wobei eine Form der plastischen Verformung (10) durch eine Änderung der Bearbeitungsparameter bestimmbar ist.

7. Bauteil eines Kraftfahrzeugprüfstandes mit einer Oberfläche, die eine Vielzahl plastische Verformungen (10) aufweist, wobei das Bauteil dazu eingerichtet ist, ein Kraftfahrzeugrad auf der Oberfläche aufzustellen und die Vielzahl plastischer Verformungen (10) mittels des Verfahrens gemäß zumindest einem der Ansprüche 1 bis 6 hergestellt worden sind.

8. Kraftfahrzeugprüfstand mit zumindest einem Bauteil gemäß Anspruch 7.

## Claims

1. Method for surface machining of a component of a motor vehicle test stand, wherein the component has a plastically deformable material in the region of the surface (3) to be machined, and the component is a roller (1) and/or a plate (1a) for receiving a vehicle wheel, and the surface (3) to be machined of the roller (1) is the outer circumferential surface (3) or a part of the outer circumferential surface (3), and the surface (3) to be machined of the plate is at least a part of one of the outer planar surfaces of the plate (1a), the method comprising:
generating a plastic deformation (10) of the material in a partial section of the surface (3) to be machined by pressing in the material using a tool (100, 101) in such a way that the plastic deformation (10) in the partial section comprises a depression (5) and an elevation (6) of the surface (3), and
repeating the generation of a plastic deformation (10) in another partial section of the surface (3) to be machined.

2. Method according to Claim 1, wherein the generation of a plastic deformation (10) is repeated according to a predefined pattern for the arrangement of the plastic deformations (10) on the surface (3).

3. Method according to at least one of the preceding patent claims, wherein the tool (100, 101) is held by a machine tool and the generation of the plastic deformation (10) is carried out by means of the machine tool.

4. Method according to at least one of the preceding patent claims, wherein the tool (100, 101) is held by a machine tool, the generation of the plastic deformation (10) is carried out by means of the machine tool and a movement of the tool (100, 101) to another partial region for the repetition of the step for generating a plastic deformation (10) is carried out by the machine tool.

5. Method according to at least one of the preceding patent claims, wherein a shape of the plastic deformation (10) can be determined by the selection of the tool (100, 101).

6. Method according to at least one of the preceding patent claims, wherein a shape of the plastic deformation (10) can be determined by a change in the machining parameters.

7. Component of a motor vehicle test stand having a surface which has a multiplicity of plastic deformations (10), wherein the component is configured to set up a motor vehicle wheel on the surface, and the multiplicity of plastic deformations (10) have been produced by means of the method according to at least one of Claims 1 to 6.

8. Motor vehicle test stand having at least one component according to Claim 7.

## Revendications

1. Procédé d'usinage de surface d'un composant d'un banc d'essai de véhicule automobile, le composant présentant, dans la région de la surface à usiner (3), un matériau plastiquement déformable et le composant étant un rouleau (1) et/ou une plaque (1a) pour recevoir une roue de véhicule et la surface à usiner (3) du rouleau (1) étant la surface d'enveloppe extérieure (3) ou une partie de la surface d'enveloppe extérieure (3) et la surface à usiner (3) de la plaque étant au moins une partie d'une des surfaces planes extérieures de la plaque (1a), le procédé comprenant :
la génération d'une déformation plastique (10) du matériau dans une section partielle de la surface à usiner (3) par une compression du matériau avec un outil (100, 101) de telle sorte que la déformation plastique (10) dans la section partielle comprenne un renfoncement (5) et une élévation (6) de la surface (3), et
la répétition de la génération d'une déformation plastique (10) dans une autre section partielle de la surface à usiner (3).

2. Procédé selon la revendication 1, dans lequel la génération d'une déformation plastique (10) est répétée selon un modèle prédéfini pour l'agencement des déformations plastiques (10) sur la surface (3).

3. Procédé selon au moins l'une des revendications précédentes, dans lequel l'outil (100, 101) est maintenu par une machine-outil et la génération de la déformation plastique (10) est effectuée au moyen de la machine-outil.

4. Procédé selon au moins l'une des revendications précédentes, dans lequel l'outil (100, 101) est maintenu par une machine-outil, la génération de la déformation plastique (10) est effectuée au moyen de la machine-outil et un déplacement de l'outil (100, 101) vers une autre zone partielle est effectué pour la répétition de l'étape de génération d'une déformation plastique (10) par la machine-outil.

5. Procédé selon au moins l'une des revendications précédentes, dans lequel une forme de la déformation plastique (10) peut être déterminée par la sélection de l'outil (100, 101).

6. Procédé selon au moins l'une des revendications précédentes, dans lequel une forme de la déformation plastique (10) peut être déterminée par une modification des paramètres d'usinage.

7. Composant d'un banc d'essai de véhicule automobile avec une surface qui présente une pluralité de déformations plastiques (10), le composant étant conçu pour installer une roue de véhicule automobile sur la surface et la pluralité de déformations plastiques (10) ayant été fabriquées au moyen du procédé selon au moins l'une des revendications 1 à 6.

8. Banc d'essai de véhicule automobile avec au moins un composant selon la revendication 7.
